# EUROPEAN PATENT SPECIFICATION

(11) **EP 3 602 299 B1**
(45) Date of publication and mention of the grant of the patent: **17.07.2024**
(21) Application number: 18845032.4
(22) Date of filing: 06.08.2018
(51) Int. Cl.: G06F 9/50

(54) **SYSTEM FOR PROVIDING FUNCTION AS A SERVICE (FAAS), AND OPERATING METHOD OF SYSTEM**
SYSTEM ZUR BEREITSTELLUNG VON FUNKTIONEN ALS DIENST (FAAS) UND BETRIEBSVERFAHREN DES SYSTEMS
SYSTÈME DE FOURNITURE DE FONCTION À LA DEMANDE (FAAS), ET PROCÉDÉ DE FONCTIONNEMENT DU SYSTÈME

(30) Priority: 09.08.2017 US 201762542916 P; 19.07.2018 KR 20180084271
(43) Date of publication of application: 05.02.2020
(73) Proprietor: Samsung Electronics Co., Ltd., Suwon-si, Gyeonggi-do 16677 (KR)
(72) Inventor: KIM, Keun-seob, Suwon-si Gyeonggi-do 16708 (KR); SONG, Jin-woo, Seoul 06538 (KR); WOO, Hong-uk, Suwon-si Gyeonggi-do 16419 (KR)
(74) Representative: HGF
(86) International application number: PCT/KR2018/008887
(87) International publication number: WO 2019/031783

(56) References cited:
- WO-A1-2016/105362
- CN-A- 104 714 812
- US-A1- 2005 288 961
- US-A1- 2010 262 660
- US-A1- 2014 122 595
- US-A1- 2014 330 949
- US-A1- 2017 126 792

## Description

### Technical Field

The disclosure relates to systems for providing a function as a service (FaaS) and methods of operating the systems, and more particularly, to systems capable of efficiently using resources when executing a FaaS and methods of operating the systems.

### Background Art

On a function as a service (FaaS) platform, the entire infrastructure such as programs needed for application development, networks, or storage or the like are provided, and thus, a developer does not have to additionally set up a computer server (a virtual server, a web server or the like) or add or manage resources such as an operating system **(OS)** or a memory. In addition, because source codes are provided in units of functions, a developer may search for a needed function and use the same. That is, a developer just has to access a FaaS and write program codes by using a serviced function. In this regard, a FaaS is also referred to as serverless computing. In a FaaS, a size of a serviced function is limited and a common container is generated in advance for a higher response speed. However, a uniform response speed is not guaranteed for each requested function and thus delay time is generated, and resources may be unnecessarily wasted.

The above information is presented as background information only to assist with an understanding of the present disclosure. No determination has been made, and no assertion is made, as to whether any of the above might be applicable as prior art with regard to the present disclosure. US 2017/126792 A1 discloses a method for optimizing resource usage of service function chains in a network using machine learning.

### Disclosure of Invention

### Technical Problem

In a FaaS, a size of a serviced function is limited and a common container is generated in advance for a higher response speed. However, a uniform response speed is not guaranteed for each requested function and thus delay time is generated, and resources may be unnecessarily wasted.

### Solution to Problem

In accordance with an aspect of the disclosure, systems for allocating optimized resources for a function based on at least one of characteristics of the function and execution information of the function, are provided and operating methods of the systems are also provided.

### Advantageous Effects of Invention

According to the system of the embodiment, a response time to an execution request for a function, an execution time of a function, or the like, may be fast.

According to the system of the embodiment, resources used to execute a function may be used efficiently.

### Brief Description of Drawings

The above and other aspects, features, and advantages of certain embodiments of the present disclosure will be more apparent from the following description taken in conjunction with the accompanying drawings, in which:
FIG. 1 is a block diagram illustrating a configuration of a system providing a function as a service (FaaS), according to an embodiment;
FIG. 2 is a block diagram illustrating a detailed configuration of a system, according to an embodiment;
FIG. 3 is a block diagram illustrating a configuration of a system, according to an embodiment;
FIG. 4 is a view illustrating an operation of a system, according to an embodiment;
FIG. 5 is a view illustrating an operation of a system, according to an embodiment;
FIG. 6 is a view illustrating an operation of a system, according to an embodiment;
FIG. 7 is a view illustrating a user interface screen provided in a system, according to an embodiment;
FIG. 8 is a flowchart illustrating an operating method of a system, according to an embodiment;
FIG. 9 is a flowchart illustrating an operating method of a system, according to an embodiment; and
FIG. 10 is a flowchart illustrating an operating method of a system, according to an embodiment.

### Best Mode for Carrying out the Invention

The scope of the invention is defined by the appended claims.

### Mode for the Invention

Reference will now be made in detail to embodiments, examples of which are illustrated in the accompanying drawings, wherein like reference numerals refer to like elements throughout. In this regard, the embodiments may have different forms and should not be construed as being limited to the descriptions set forth herein. Accordingly, the embodiments are merely described below, by referring to the figures, to explain aspects. Expressions such as "at least one of," when preceding a list of elements, modify the entire list of elements and do not modify the individual elements of the list.

Hereinafter, the terms used in the specification will be briefly described, and then the present disclosure will be described in detail.

The terms used in this specification are those general terms currently widely used in the art in consideration of functions in regard to the present disclosure, but the terms may vary according to the intention of those of ordinary skill in the art, precedents, or new technology in the art. Also, specified terms may be selected by the applicant, and in this case, the detailed meaning thereof will be described in the detailed description of the disclosure. Thus, the terms used in the specification should be understood not as simple names but based on the meaning of the terms and the overall description of the disclosure.

Throughout the specification, it will also be understood that when a component "includes" an element, unless there is another opposite description thereto, it should be understood that the component does not exclude another element but may further include another element. In addition, terms such as "... unit", "... module", or the like refer to units that perform at least one function or operation, and the units may be implemented as hardware or software or as a combination of hardware and software.

The disclosure now will be described more fully hereinafter with reference to the accompanying drawings, in which embodiments of the disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those of ordinary skill in the art. Like numbers refer to like elements throughout.

Throughout the specification, a "user" may refer to a person who controls a system, a function or an operation, and may be, for example, a developer, a manager, or an m-stallation engineer.

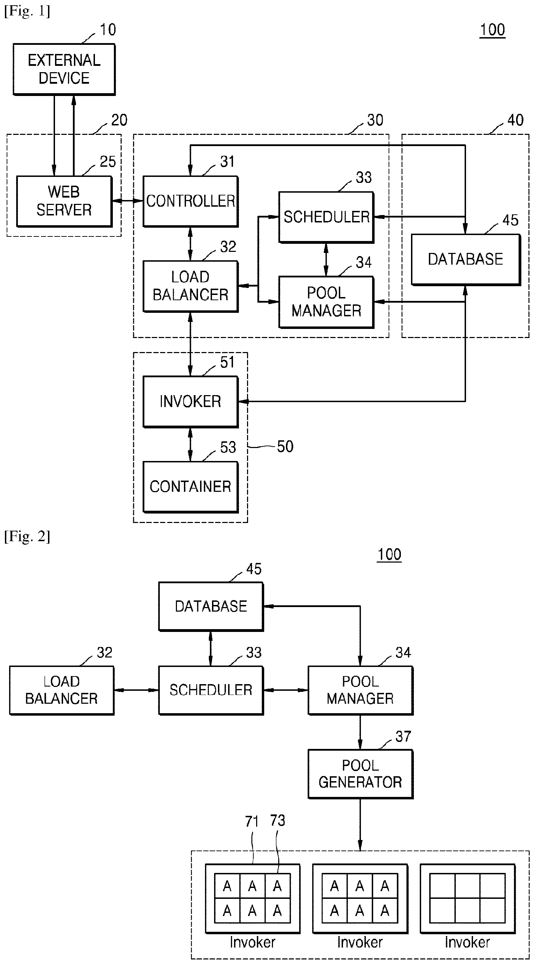

FIG. 1 is a block diagram illustrating a configuration of a system 100 providing a function as a service (FaaS), according to an embodiment.

The system 100, according to an embodiment, is a system for providing a serverless cloud computing service, and may provide a cloud computing method of executing a code to respond to an event. Here, the term "serverless" means that there is no additionally allocated server with respect to a corresponding event so that a user does not have to control infrastructure or a platform. The system 100, according to an embodiment, provides a function as a service (FaaS) for executing a code in units of functions when an event is generated.

Referring to FIG. 1, the system 100, according to an embodiment, may include a web server 25, a controller 31, a load balancer 32, a scheduler 33, a pool manager 34, a database 45, an invoker 51, and a container 53.

The web server 25 operates as a front-end of the system 100 according to an embodiment and provides a website to a user of the external device 10. For example, when a user requests a service, the web server 25 provides a web page written in HTML through a network. The web server 25 may be an Nginx web server or an Apache web server or the like, but is not limited thereto.

The web server 25, according to an embodiment, may receive an execution request for a function (a FaaS) in various forms from the external device 10.

The web server 25 may transfer the execution request for a function received from the external device 10 to the controller 31, and receive an execution result of the function from the controller 31 and transmit the result to the external device 10.

The external device 10, according to an embodiment, may be implemented using various electronic devices such as mobile phones, tablet PCs, digital cameras, camcorders, laptop computers, desktops, electronic book terminals, digital broadcasting terminals, personal digital assistants (PDAs), portable multimedia players (PMPs) navigation devices, MP3 players, Internet of Things (IoT) devices, wearable devices, consumer electronics (CE) devices (e.g., refrigerators with display panels, air conditioners, etc.), but is not limited thereto.

The controller 31, according to an embodiment, determines whether a request received from the external device 10 contains an authority, by using the database 45, and when an authority is determined, the controller 31 may transfer the request to the load balancer 32. Here, transfer of requests or data or the like between the controller 31 and the load balancer 32 may be done through a message queue, but is not limited thereto.

The load balancer 32 may allocate a job corresponding to the request, to an invoker 51 that is most appropriate for the request from among a plurality of invokers. Here, transfer of requests or data or the like between the load balancer 32 and the invoker 51 may be done through a message queue, but is not limited thereto.

The invoker 51 takes information needed for the job allocated by the load balancer 32 from the database 45, and controls the container 53 such that the job is executed by the container 53. For example, the invoker 51 takes a code corre- sponding to a function, for which the execution is requested, from the database 45, and transfers the code to the container 53, and the container 53 executes the code received from the invoker 51.

The scheduler 33 and the pool manager 34 will be described in detail with reference to FIG. 2.

Meanwhile, the database 45 may store, for example, authority information for executing a function registered with the system 100, according to an embodiment, a code corresponding to a function registered with the system 100, and data, files, and libraries needed for executing a function.

Elements of the system 100, according to an embodiment, may be classified into a front-end layer 20, a scheduling layer 30, a job layer 50, and a storage layer 40, but this is exemplary, and the elements are not limited thereto.

FIG. 2 is a block diagram illustrating a configuration of a system 100, according to an embodiment.

Referring to FIG. 2, the system 100, according to an embodiment, may include a database 45, a load balancer 32, a scheduler 33, a pool manager 34, and a pool generator 37.

The scheduler 33 may monitor a request received by the load balancer 32. For example, when a message queue is included between the controller 31 and the load balancer 32 of FIG. 1, the scheduler 33 may monitor requests stored in the message queue. However, the scheduler 33 is not limited thereto. The scheduler 33 may monitor execution information of a function, and may monitor, for example, a point in time when an execution request for a function is received, the number of times that an execution request for a function is requested, a frequency of execution requests for a function. In addition, the scheduler 33 may count the number of times of function execution requests according to months, days of the week, time zones, or anniversaries. The scheduler 33 may monitor execution information of each function, analyze the monitored information, and store the information in the database 45.

For example, the scheduler 33 may determine, for each function, time information which is information about a time at which an execution request for the function is made, a preset number of times or more, and store the determined time information in the database 45. In addition, the scheduler 33 may determine an amount of resources needed to execute a function in response to a number of times of execution requests received at a time corresponding to the time information and an execution request received at a time corresponding to the time information, and store the determined amount of resources in the database 45, but is not limited thereto.

Meanwhile, the scheduler 33 predicts, for each function, a point in time of an execution request for a function or a number of times of execution requests at the point in time, based on a prediction model. The prediction model is trained by using execution information of a function. In addition, the scheduler 33 predicts, for each function, a job load, a response time, a function execution time, a memory size needed for execution of a function or the like, based on a prediction model. The prediction model is trained by using characteristics of a function. The prediction model may be a model based on a neural network, such as a deep neural network (DNN), a recurrent neural network (RNN), a bidirectional recurrent deep neural network (BRDNN), but is not limited thereto.

Meanwhile, the database 45 may store a result of analyzing function characteristics. For example, the system 100 analyzes test log information of a function, a code size of a function, whether an external library is needed during execution of a function, whether other functions are included in a function, or the like, and determines an amount of resources to execute the function based on an analysis result and stores the amount of resources in the database 45.

The pool manager 34 may take, from the database 45, pool configuration information corresponding to a function, and control the pool generator 37 such that the pool generator 37 generates a pool based on the pool configuration information. For example, when the number of times of an execution request for function A is equal to or greater than a preset number of times at 0:00 on January 1 of every year, the pool manager 34 may request the pool generator 37 to generate, before 0:00 on January 1 of each year, a first container and a first invoker to execute function A. Accordingly, the pool generator 37 may generate a first container 73 and a first invoker 71 to execute function A before 0:00 on January 1 of every year.

At least one of the web server 25, the controller 31, the load balancer 32, the scheduler 33, the pool manager 34, the database 45, the invoker 51, and the container 53 of FIGS. 1 and 2 may be manufactured in a hardware form and mounted in one apparatus or may be respectively mounted in different apparatuses. In addition, at least one of the web server 25, the controller 31, the load balancer 32, the scheduler 33, the pool manager 34, the database 45, the invoker 51, and the container 53 may be implemented as a software module. When at least one of the web server 25, the controller 31, the load balancer 32, the scheduler 33, the pool manager 34, the database 45, the invoker 51, and the container 53 is implemented as a software module (or a program module including an instruction), the software module may be stored in a computer-readable non-transitory computer readable medium. Further, in this case, the at least one software module may be provided by an operating system (OS) or by a predetermined application. Alternatively, portions of the at least one software module may be provided by an OS, and other portions of the software module may be provided by a predetermined application.

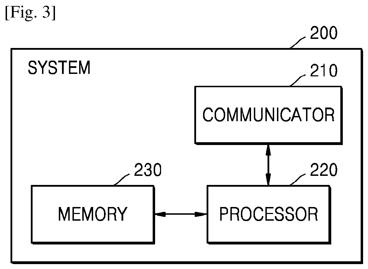

FIG. 3 is a block diagram illustrating a system 200, according to an embodiment.

The system 200, according to an embodiment, includes a communicator 210, a processor 220, and a memory 230.

The processor 220, according to an embodiment, controls the overall system 200. The processor 220, according to an embodiment, executes one or more programs stored in the memory 230.

The memory 230, according to an embodiment, stores various data, programs or applications to drive and control the system 200. A program stored in the memory 230 may include one or more instructions. A program (one or more instructions) or application stored in the memory 230 s executed by the processor 220. In addition, the processor 220 may include the database 45 illustrated in and described with reference to FIGS. 1 and 2, but is not limited thereto.

The processor 220, according to an embodiment, may perform at least one of the operations performed by the controller 31, the load balancer 32, the scheduler 33, the pool manager 34, the invoker 51, and the container 53, illustrated in and described with reference to FIGS. 1 and 2.

For example, the processor 220 analyzes at least one of execution information of a function and characteristics of the function. The processor 220 monitors a point in time of an execution request for a function, the number of times of an execution request for the function, and a frequency of execution requests for the function, to analyze execution information of the function. In addition, by using a result of analyzing the execution information of the function, the processor 220 provides recommendation information related to a resource setting for a particular time or day of the week (recommendation information related to memory specifications or central processing unit (CPU) specifications).

Alternatively, the processor 220 analyzes test log information of a function, a code size of the function, whether an external library is needed during an execution of the function, whether other functions are included in the function, or the like. In addition, based on at least one of test log information of a function, a code size of the function, whether an external library is needed during the execution of the function, and whether other functions are included in the function, the processor 220 determines a computation amount of the function. The processor 220 may provide recommendation information regarding memory specifications or CPU specifications about the function based on the determined computation amount of the function.

The processor 220 analyzes the execution information of the function to determine time information about a time at which the function is requested more than a preset number of times, and generates and allocates resources for executing the function, before a point in time corresponding to the determined time information. For example, the processor 220 generates a first invoker and a first container to execute a function A at a particular point in time, and include or install data, files, libraries, or the like, that are needed to execute the function A in the first container. In addition, the processor 220 determines a number of first invokers or a number of the first containers based on the number of times of an execution request for the function A.

In addition, by analyzing characteristics information of a function, the processor 220 determines a computation amount of the function, and determines an amount of resources allocated based on the determined computation amount. For example, by analyzing characteristics of the function A, the processor 220 determines a com-8
putation amount of the function A, and when the determined computation amount of the function A is equal to or greater than a preset computation amount, the processor 220 allocates a relatively large amount of resources to the function A.

Meanwhile, the processor 220 predicts, for each function, a point in time of an execution request or a number of times of an execution request at the point in time, based on a prediction model. The prediction model is trained by using execution information regarding a function. In addition, the processor 220 predicts, for each function, a job load, a response time, a function execution time, a memory size needed for execution of a function, or the like, based on a prediction model. The prediction model is trained by using characteristics of a function. The prediction model may be a model based on a neural network, such as a deep neural network (DNN), a recurrent neural network (RNN), a bidirectional recurrent deep neural network (BRDNN), but is not limited thereto.

In addition, the processor 220 executes a function by using resources allocated to the function in response to an execution request for the function. For example, when a first container and a first invoker for executing the function A are previously generated, and when an execution request for function A is received, the processor 220 may quickly execute the function A without a time delay by using the generated first invoker and the generated first container.

The communicator 210 may transmit or receive data or signals to or from an external device or an external server according to the control by the processor 220. The communicator 210, according to an embodiment, may perform an operation of the web server 25 illustrated in and described with reference to FIG. 1. For example, the communicator 210 receives an execution request for a function from the external device or the external server through a network.

The communicator 210 may include at least one component that allows communication through a local area network (LAN), a wide area network (WAN), a value added network (VAN), a mobile radio communication network, a satellite communication network or a combination thereof. In addition, the communicator 210 may transmit or receive data or signals in a wireless manner immediately through a wireless LAN (e.g., Wi-Fi) with an external device or an external server. The communicator 210 may be a combination of hardware and software such as a network card.

Meanwhile, the block diagrams of the system 100 or 200 illustrated in FIGS. 1 through 3 are block diagrams, according to an embodiment. The elements in the block diagrams may be integrated, added, or omitted according to the specifications of the system 100 or 200 that are implemented. That is, according to necessity, two or more components may be integrated into a single component or a single component may be divided into two or more components. In addition, functions performed in respective blocks are for the purpose of describing embodiments, and detailed operations or devices do not limit the scope of the disclosure.

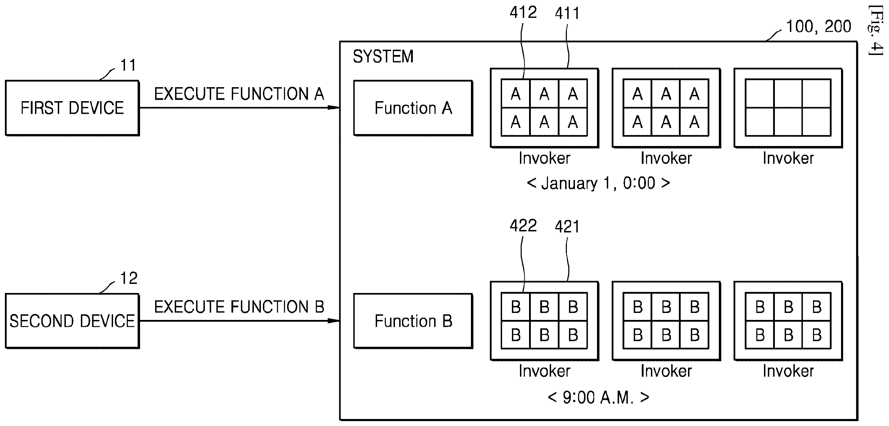

FIG. 4 is a view illustrating an operation of a system 100 or 200, according to an embodiment.

The system 100 or 200, according to an embodiment, monitors execution information of a function. For example, the system 100 or 200 may monitor a point in time when an execution request for a function is received, a number of times that the execution request for a function is requested, a frequency of execution requests for the function. In addition, the system 100 or 200 may count the number of times of an execution request for the function according to months, days of the week, time zones, or anmversarles.

Meanwhile, the system 100 or 200 may predict, for each function, a point in time of an execution request or a number of times of an execution request at the point in time, based on a prediction model. The prediction model is trained by using execution information of a function.

Accordingly, the system 100 or 200 determines time information about a time at which an execution request for a function is made, a preset number of times, or more, and generate and allocate resources for executing the function, before a point in time corresponding to the determined time information.

For example, when the number of times of an execution request for the function A is equal to or greater than a preset number of times at 0:00 on January 1 of every year, the system 100 or 200 may further generate, before 0:00 on January 1 of each year, a first container 412 and a first invoker 411 to execute the function A. In addition, the system 100 or 200 may determine a number of the first containers 412 and the first invokers 411 to be additionally generated, by considering the number of times of an execution request for the function A corresponding to the determined time information (for example, 0:00 on January 1 of every year). Here, data, files, libraries, or the like needed to execute the function A may be included or installed in the first container 412. For example, when an external library is needed to execute the function A, the external library may be downloaded in advance into the first container 412 before a point in time corresponding to the determined time information. In addition, when a library is compressed together in a file for executing a function or includes an installation file, the compression may be decompressed or the installation file may be executed to install the library in advance before the point in time corresponding to the determined time information.

Accordingly, when an execution request for function A is received from a first device 11, the system 100 or 200 may quickly execute function A without time delay by using the first container 412 and the first invoker 411, which have been generated in advance. The first invoker 411 may control the first container 412 such that the function A is executed by using the first container 412. For example, the first invoker 411 may transfer a code corresponding to the function A to the first container 412, and the first container 412 may execute the code corresponding to the function A.

When a number of times of an execution request for a function Bis equal to or greater than a preset number of times at 9:00 A.M. every day, the system 100 or 200 may additionally generate, before 9:00 A.M. every day, a second container 422 and a second invoker 421 to execute the function B. Accordingly, the pool generator 37 may generate, before 9:00 A.M., every day, a second container 422 and a second invoker 421, to execute the function B. The system 100 or 200 may determine a number of second containers 422 and a number of second invokers 421 to be additionally generated, by considering the number of times of the execution request for the function B corresponding to the determined time information (for example, 9:00 A.M. every day). Here, data, files, libraries, or the like needed for executing the function B may be included or installed in the second container 422.

Accordingly, when an execution request for the function Bis received from a second device 12, the system 100 or 200 may quickly execute the function B without a time delay by using the second container 422 and the second invoker 421 that are generated in advance (prior to the execution request). The second invoker 421 may control the second container 422 such that the function B is executed by using the second container 422.

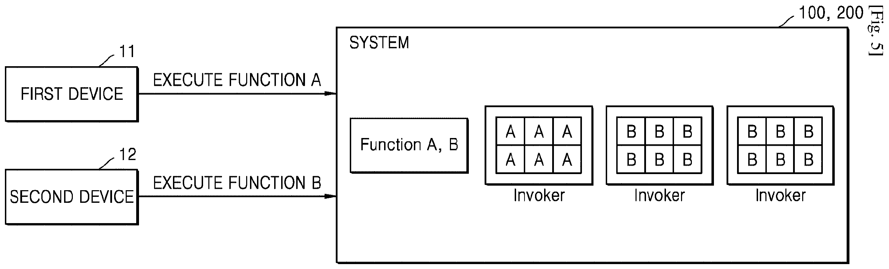

FIG. 5 is a view illustrating an operation of a system 100 or 200, according to an embodiment.

The system 100 or 200, according to an embodiment, analyzes characteristics of a function. For example, the system 100 or 200 may analyze test log information of a function, a code size of the function, whether an external library is needed during an execution of the function, whether other functions are included in the function, or the like to determine a computation amount of the function. The system 100 or 200 determines an amount of resources allocated to the function based on the determined computation amount of the function.

When the computation amount of the function A is smaller than a preset computation amount, the system 100 or 200 may allocate typical resources to the function A, and when a computation amount of the function Bis equal to or greater than a preset computation amount, more resources than those allocated to the function A may be allocated to the function B. For example, when a computation amount of the function A is determined to be smaller than a preset computation amount, the system 100 or 200 may allocate N containers to the function A. Accordingly, when an execution request for the function A is received from the first device 11, the system 100 or 200 may execute the function A by using the N containers allocated to the function A.

On the other hand, when a computation amount of the function B is determined to be greater than a preset computation amount, the system 100 or 200 may allocate M containers, which is more than N, to the function B. Accordingly, when an execution request for the function Bis received from the second device 12, the system 100 or 200 may execute the function B by using the M containers allocated to the function B.

The preset computation amount may include a plurality of values, and the system 100 or 200 may allocate different resources to sections including the computation amount of the function. Accordingly, an execution speed of the function may be increased, and resources of the system may be managed efficiently.

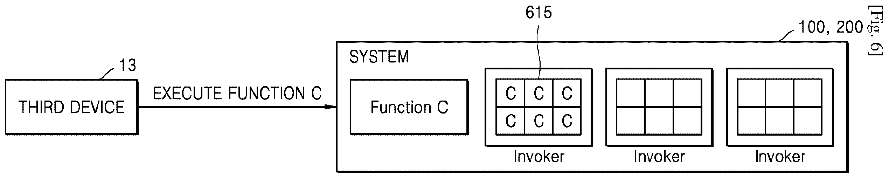

FIG. 6 is a view illustrating an operation of a system 100 or 200, according to an embodiment.

The system 100 or 200 may determine whether an external library is needed during an execution of a function, and when an external library is needed, the system 100 or 200 may download the external library in advance (prior to the execution request). For example, when a library is compressed together in a file for executing a function C or includes an external library installation file, the compression may be decompressed in advance or the installation file may be executed to install the library in a container 615 allocated to the function C. Here, the system 100 or 200 may predict a point in time at which the function C is to be requested, and may download the external library in advance, before the predicted point in time.

When a library needed for execution of a function is previously downloaded or installed in a container, the system 100 or 200 may have shorter response time for an execution request for a function compared to when executing a function after downloading a library.

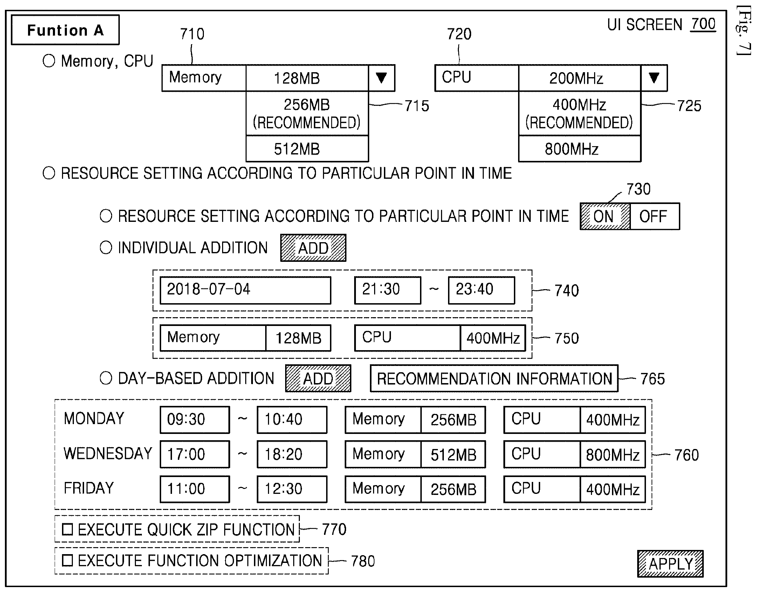

FIG. 7 is a view illustrating a user interface (UI) screen 700 provided in a system 100 or 200, according to an embodiment.

Referring to FIG. 7, the system 100 or 200, according to an embodiment, may set specifications of a memory and a CPU for each function, and may provide a user interface (UI) screen 700 via which the specifications of the memory and the CPU may be set according to each function and each point in time.

For example, the user interface (UI) screen 700 may include an item for setting specifications of a memory or a CPU with respect to a particular function, an item for selecting an automatic prediction function with respect to a particular function, an item for setting specifications of a memory or a CPU according to a particular point in time with respect to a particular function.

FIG. 7 illustrates an example in which the function A is selected and resources corresponding to the function A are set. A user may set memory specifications regarding the function A by using a first item 710, and set CPU specifications for the function A by using a second item 720.

For example, when the memory specifications is set to 128 MB, and the CPU specifications is set to 200 MHz, and an execution request for the function A is received, the function A may be executed by using a memory of 128 MB and a CPU of 200 MHz.

Meanwhile, the system 100 or 200 may analyze characteristics of the function A, and provide recommendation information related to setting of resources to execute the function A.

For example, the system 100 or 200 may determine a computation amount of the function A based on at least one of test log information of the function A, a code size of the function A, whether an external library is needed during the execution of the function A, and whether other functions are included in the function A. The system 100 or 200 may provide recommendation information 715 and 725 regarding the memory specifications or the CPU specifications of the function A based on the determined computation amount of the function, as illustrated in FIG. 7.

In addition, by using a third item 730, the user selects whether to apply an automatic prediction function with respect to the function A. For example, when applying an automatic prediction function to the function A, the system 100 or 200 predicts a point in time with respect to an execution of the function A by monitoring execution information of the function A (for example, a point in time of an execution request for the function A, a number of times an execution of the function A is requested, a frequency of execution requests for the function A, or the like), and allocates, before the predicted point in time, optimized resources for executing the function A. In addition, by using a fourth item 740 and a fifth item 750, the user may set the memory specifications and/or the CPU specifications corresponding to a particular date and a particular time with respect to the function A. For example, when a date is set to July 4 of 2018, and a time is set to: from 21:30 to 23:40, and the memory specifications are set to 128 MB and the CPU specifications are set to 400 MHz, and an execution request for the function A is received between 21:30 and 23:40 on July 4, 2018, then the function A is performed by using a memory of 128 MB and a CPU of 400 MHz.

In addition, by using a sixth item 760, the user may set the memory specifications and the CPU specifications, corresponding to a particular time according to days of the week, with respect to the function A. For example, when a day of the week is set to Monday, time is set between 9:30 and 10:40, and memory specifications to 256 MB, and CPU specifications to 400 MHz, and an execution request for the function A is received on Monday, between 9:30 and 10:40, the function A is executed by using a memory of 256 MB and a CPU of 400 MHz.

Meanwhile, the system 100 or 200 may provide a user with recommendation m-formation related to resource setting according to a day of the week based on a result of analyzing execution information of the function A (e.g., a point in time of an execution request for the function A, a number of times an execution of the function A is requested, a frequency of the execution requests for the function A, or the like). For example, when a recommendation information icon 765, illustrated in FIG. 7, is selected, the system 100 or 200 may provide recommendation information related to the memory specifications or the CPU specifications of the function A according to days of the week or recommended memory specifications or recommended CPU specifications for the function A according to days of the week may be automatically input into the sixth item 760. However, the disclosure is not limited thereto.

Also, when an external library or the like is included in a function as a compressed file, the user may set, by using a seventh item 770, whether to decompress or download the external library in a container in which a function is to be executed, in advance, before executing the function.

In addition, by using an eighth item 780, the user may determine a computation amount according to characteristics of a function, and set whether to allocate optimized resources (for example, determining an amount of resources) based on the determined computation amount.

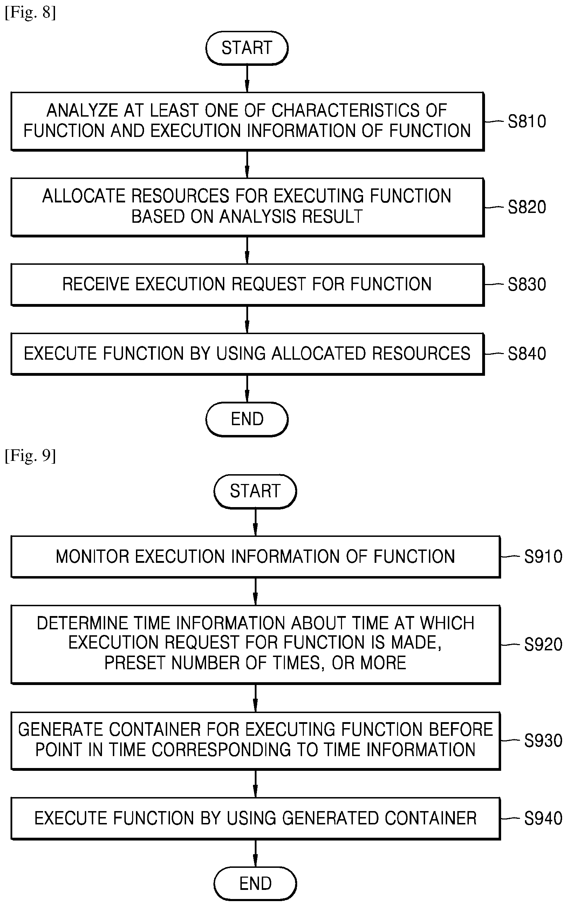

FIG. 8 is a flowchart illustrating an operating method of a system 100 or 200, according to an embodiment.

Referring to FIG. 8, the system 100 or 200 analyzes at least one of characteristics of a function and execution information of the function (in operation S810).

For example, the system 100 or 200 may analyze test log information of a function, a code size of the function, whether an external library is needed during the execution of the function, whether other functions are included in the function, or the like. Alternatively, the system 100 or 200 may analyze a point in time of an execution request for a function, a number of times an execution of the function is requested, a frequency of execution requests for the function, or the like. This will be described in more detail below with reference to FIG. 9.

The system 100 or 200 allocates resources for executing a function based on an analysis result (in operation S820).

For example, the system 100 or 200 may determine a computation amount of the function A by analyzing characteristics of the function A, and when the determined computation amount of the function A is equal to or greater than a preset computation amount, the system 100 or 200 may allocate a relatively large amount of resources to the function A. Alternatively, when an external library is needed during the execution of the function A, the system 100 or 200 may allocate a container for executing the function A, and download an external library in advance in the container allocated to the function A.

Alternatively, the system 100 or 200 predicts a point in time of an execution request for the function A and a number of times requests for the function A are made, by analyzing execution information of the function A, and allocates resources to execute the function A according to the predicted point in time and the predicted number of times. This will be described in more detail below with reference to FIG. 9.

Upon receiving an execution request for the function (in operation S830), the system 100 or 200 executes the function by using the resources allocated in operation S820 (in operation S840).

For example, in operation S820, when a first container and a first invoker are generated to execute the function A, and an execution request for the function A is received, the system 100 or 200 quickly executes the function A without a time delay by using the first invoker and the first container.

FIG. 9 is a flowchart illustrating an operating method of a system 100 or 200, according to an embodiment.

Referring to FIG. 9, the system 100 or 200 monitors execution information of a function (in operation S910).

For example, the system 100 or 200 monitors a point in time when an execution request for a function is received, a number of times that an execution of the function is requested, a frequency of execution requests for the function, or the like. In addition, the system 100 or 200 may count a number of times of an execution request for the function according to months, days of the week, time zones, or anniversaries, monitor execution information of each function, and analyze the monitored information and store the same in a database.

The system 100 or 200 may determine time information about a time at which an execution request for the function is made a preset number of times or more, based on the information monitored in operation S910 (in operation S920).

For example, when a number of times of an execution request for the function A is equal to or greater than a preset number of times at 0:00 on January 1 of every year, the system 100 or 200 may determine, as time information, 0:00 on January 1 of each year. Alternatively, when a number of times of an execution request for the function B at 9:00 A.M. every day is equal to or greater than a preset number of times, the system 100 or 200 may determine, as time information, 9:00 A.M. every day. However, the disclosure is not limited thereto.

The system 100 or 200 generates a container for executing a function, before a point in time corresponding to the time information determined in the operation S920 (in operation S930).

For example, the system 100 or 200 may generate, before 0:00 on January 1 of every year, a first container and a first invoker to execute the function A. For example, data, files or libraries, or the like needed to execute the function A may be included or installed in the first container. The system 100 or 200 may determine a number of first invokers and first containers based on the monitored number of times of the execution request for the function A in operation S910.

In addition, the system 100 or 200 may generate, before 9:00 A.M. every day, a second invoker or a second container to execute the function B, and may determine a number of second invokers and second containers based on a number of times of an execution request for the function B.

Upon receiving an execution request for the function, the system 100 or 200 executes the function by using a container generated in advance in operation S930 (in operation S940).

For example, in operation S930, when a first container and a first invoker are generated to execute the function A, and an execution request for the function A is received, the system 100 or 200 quickly executes the function A without time delay by using the first invoker and the first container.

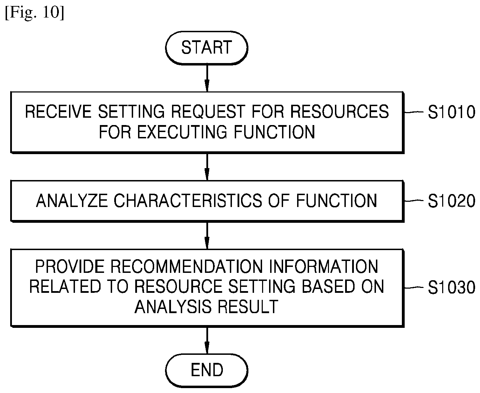

FIG. 10 is a flowchart illustrating an operating method of a system 100 or 200, according to an embodiment.

Referring to FIG. 10, the system 100 or 200 receives a setting request for resources used to execute a function (in operation S1010).

In response to the setting request for resources, the system 100 or 200 may provide a user interface screen including an item for setting specifications of a memory and/or a CPU with respect to a particular function, an item for selecting whether to apply an automatic prediction function with respect to a particular function, an item for setting specifications of a memory and/or a CPU according to particular points in time with respect to a particular function.

In addition, the system 100 or 200 analyzes characteristics of a function for which resource setting is requested (in operation S1020).

For example, the system 100 or 200 determines a computation amount of a function based on at least one of test log information of the function, a code size of the function, whether an external library is needed during the execution of the function, and whether other functions are included in the function.

In addition, the system 100 or 200 analyzes execution information of the function (e.g., a point in time of an execution request for the function, a number of times of an execution request for the function, a frequency of execution requests for the function, or the like). For example, the system 100 or 200 monitors a point in time of an execution request for a function, a number of times of an execution request for the function, a frequency of execution requests for the function, or the like. In addition, the system 100 or 200 may count a number of times of an execution request for a function according to months, days of the week, time zones or anniversaries by using a prediction model. The prediction model is trained by using the execution m-formation of the function. Accordingly, the system 100 or 200 may determine time m-formation about a time at which an execution request for the function is made, a preset number of times, or more.

The system 100 or 200 provides recommendation information related to resource setting based on an analysis result (in operation S1030).

For example, the system 100 or 200 may provide recommendation information regarding memory specifications and/or CPU specifications about the function based on the determined computation amount of the function.

In addition, the system 100 or 200 may provide a user with recommendation information related to resource setting according to particular times or days of the week (recommendation information regarding memory specifications or CPU specifications), based on a result of analyzing the execution information of the function, but is not limited thereto.

According to the system of the embodiment, a response time to an execution request for a function, an execution time of a function, or the like, may be fast.

According to the system of the embodiment, resources used to execute a function may be used efficiently.

The operating method of the system for providing a FaaS, according to an embodiment, can be implemented as program instructions that can be executed using various computer components and can be written to a computer readable recording medium. The computer readable recording medium may include program instructions, a data file, a data structure, etc. alone or in combination. The program instructions written to the computer readable recording medium may be specifically designed and configured for embodiments of the present disclosure or may be well-known and available to one of ordinary skill in the art. Examples of the computer readable recording medium include magnetic media (e.g., hard disks, floppy disks, magnetic tapes, etc.), optical media (e.g., CD-ROMs, or DVDs), magneto-optical media (e.g., floptical disks), and hardware devices specifically configured to store and execute program instructions (e.g., ROM, RAM, flash memories, etc.). Examples of the program instructions include not only machine codes generated by using a compiler but also high-level language codes that can be executed on a computer by using an interpreter or the like.

Also, the system for providing a FaaS, according to embodiments, or the operating method of the system may be included in a computer program product to be provided. The computer program product may be traded as a product between a seller and a buyer.

The computer program product may include a software program and a computer-readable storage medium storing a software program. For example, the computer program product may include a product (e.g., a downloadable application) that is electronically distributed as a software program through an electronic market (e.g., Google Play Store^{™} or AppStore) or a manufacturer of an electronic device. For electronic distribution, at least a part of the software program may be stored in a storage medium or may be temporarily generated. In this case, the storage medium may be a server of the manufacturer, a server of the electronic market, or a storage medium of a relay server that temporarily stores the software program.

The computer program product may include a storage medium of a server or a storage medium of a client apparatus in a system including the server and the client apparatus. Alternatively, when a third apparatus (e.g., a smartphone) communicating with the server or the client apparatus exists, the computer program product may include a storage medium of the third apparatus. Alternatively, the computer program product may include a software program itself transmitted from the server to the client apparatus or the third terminal or from the third apparatus to the client apparatus.

In this case, one from among the server, the client apparatus, and the third apparatus may execute the computer program product and may perform the method according to embodiments. Alternatively, two or more from among the server, the client apparatus, and the third apparatus may execute the computer program product and may execute the method according to embodiments.

For example, the server (e.g., a cloud server or an artificial intelligence (Al) server) may execute the computer program product stored in the server and may control the client apparatus communicating with the server to perform the method according to embodiments.

While one or more embodiments have been described with reference to the figures, the scope of the present disclosure is not limited thereto, and it will be understood by those of ordinary skill in the art that various changes in form and details may be made therein without departing from the scope as defined by the following claims.

## Claims

1. A system (100) of providing a function as a service (FaaS), the system comprising:
a communicator (210) configured to receive a request for setting resources to execute the function;
a memory (230) storing at least one instruction; and
a processor (220) configured to execute the at least one instruction stored in the memory,
wherein the processor is configured to execute the at least one instruction to generate, before a point in time corresponding to a time information, an invoker and a container to execute the function;
wherein the processor is further configured to execute the at least one instruction to:
analyze characteristics of the function to determine a computation amount required for the function, wherein the characteristics include at least one of: test log information of the function, a code size of the function, whether an external library is needed during an execution of the function, and whether other functions are included in the function;
generate recommendation information related to the setting of a number of containers based on the determined computation amount;
display, using a screen (700) of system (100), the recommendation information to the user and an item (730) for applying an automatic prediction function with respect to the function;
wherein, in response to selection of the item (730) displayed on the screen (700), the processor is further configured to execute the at least one instruction to analyze execution information of the function to predict a time point for the execution of the function using a prediction model trained using the execution information of a function, wherein the execution information comprises: a point in time in which an execution request for the function is made, a number of times the execution request for the function is made, and a frequency of making the execution request for the function,
wherein the processor is further configured to execute the at least one instruction to allocate, before the predicted point in time, the set number of containers, and
upon receiving an execution request for the function, execute the function using the allocated containers.

2. The system (100) of claim 1, wherein the processor (220) is further configured to execute the at least one instruction to generate, based on at least one of characteristics of a first function and execution information of the first function, a first container corresponding to the first function, and generate a second container corresponding to a second function based on at least one of the characteristics of the second function and the execution information of the second function,
wherein, the first function is executed by using the first container based on the execution request for the first function, and the second function is executed by using the second container based on the execution request for the second function.

3. The system (100) of claim 1, wherein the allocated set number of containers comprise a container in which the external library needed to execute the function is downloaded prior to the execution request for the function.

4. The system (100) of claim 1, wherein the processor (220) is further configured to execute the at least one instruction to allocate a first predetermined number of containers to the function based on the computation amount of the function determined to be less than a preset computation amount and allocate a second predetermined number of containers, which is more than the first predetermined number of containers, to the function based on the computation amount of the function determined to be equal to or greater than the preset computation amount.

5. An operating method of providing a function as a Service (FaaS), the operating method comprising:
receiving a setting request for resources for executing the function;
generating, before a point in time corresponding to a time information, an invoker and a container to execute the function;
analyzing characteristics of the function to determine a computation amount required for the function, wherein the characteristics include at least one of: test log information of the function, a code size of the function, whether an external library is needed during an execution of the function, and whether other functions are included in the function; and
based on the determined computation amount, generating recommendation information related to a setting of a number of containers;
displaying the recommendation information to the user and an item for applying an automatic prediction function with respect to the function;
wherein, in response to selection of the displayed item by the user, the method further comprises:
analyzing execution information of the function to predict a time point for the execution of the function using a prediction model trained using the execution information of a function, wherein the execution information comprises: a point in time in which an execution request for the function is made, a number of times the execution request for the function is made, and a frequency of the execution request for the function,
allocating, before the predicted point in time, the set number of containers; and
upon receiving an execution request for the function, executing the function using the allocated containers.

## Patentansprüche

1. System (100) zum Bereitstellen einer Funktion als Dienst (FaaS), wobei das System Folgendes umfasst:
einen Kommunikator (210), der zum Empfangen einer Anforderung zum Festlegen von Ressourcen zum Ausführen der Funktion konfiguriert ist;
einen Speicher (230), der mindestens eine Anweisung speichert; und
einen Prozessor (220), der zum Ausführen der mindestens einen Anweisung, die in dem Speicher gespeichert ist, konfiguriert ist,
wobei der Prozessor dazu konfiguriert ist, die mindestens eine Anweisung auszuführen, um vor einem einer Zeitinformation entsprechenden Zeitpunkt einen Aufrufer und einen Container zum Ausführen der Funktion zu generieren;
wobei der Prozessor ferner dazu konfiguriert ist, die mindestens eine Anweisung zu Folgendem auszuführen:
Analysieren von Eigenschaften der Funktion, um einen für die Funktion erforderlichen Rechenaufwand zu bestimmen, wobei die Eigenschaften mindestens eines von Folgenden enthalten: Testprotokollinformationen der Funktion, eine Codegröße der Funktion, ob während einer Ausführung der Funktion eine externe Bibliothek benötigt wird und ob andere Funktionen in der Funktion enthalten sind;
Generieren von Empfehlungsinformationen in Bezug auf das Festlegen einer Container-Anzahl basierend auf dem bestimmten Rechenaufwand;
Anzeigen, unter Verwendung eines Bildschirms (700) des Systems (100), der Empfehlungsinformationen für den Benutzer und eines Elements (730) zum Anwenden einer automatischen Vorhersagefunktion in Bezug auf die Funktion;
wobei der Prozessor als Reaktion auf eine Auswahl des Elements (730), das auf dem Bildschirm (700) angezeigt wird, ferner zum Ausführen der mindestens einen Anweisung konfiguriert ist, um Ausführungsinformationen der Funktion zu analysieren, um einen Zeitpunkt für die Ausführung der Funktion unter Verwendung eines Vorhersagemodells vorherzusagen, das unter Verwendung der Ausführungsinformationen einer Funktion trainiert wurde, wobei die Ausführungsinformationen Folgendes umfassen: einen Zeitpunkt, zu dem eine Ausführungsanforderung für die Funktion gestellt wird, eine Anzahl von Malen, die die Ausführungsanforderung für die Funktion gestellt wird, und eine Frequenz, mit der die Ausführungsanforderung für die Funktion gestellt wird,
wobei der Prozessor ferner dazu konfiguriert ist, die mindestens eine Anweisung auszuführen, um vor dem vorhergesagten Zeitpunkt die festgelegte Container-Anzahl zuzuweisen, und
nach Empfangen einer Ausführungsanforderung für die Funktion die Funktion unter Verwendung der zugewiesenen Container auszuführen.

2. System (100) nach Anspruch 1, wobei der Prozessor (220) ferner dazu konfiguriert ist, die mindestens eine Anweisung auszuführen, um basierend auf mindestens einem von Eigenschaften einer ersten Funktion und Ausführungsinformationen der ersten Funktion einen ersten Container zu generieren, der der ersten Funktion entspricht, und basierend auf mindestens einem von Eigenschaften der zweiten Funktion und den Ausführungsinformationen der zweiten Funktion einen zweiten Container zu generieren, der einer zweiten Funktion entspricht,
wobei die erste Funktion unter Verwendung des ersten Containers basierend auf der Ausführungsanforderung für die erste Funktion ausgeführt wird und die zweite Funktion unter Verwendung des zweiten Containers basierend auf der Ausführungsanforderung für die zweite Funktion ausgeführt wird.

3. System (100) nach Anspruch 1, wobei die zugewiesene festgelegte Container-Anzahl einen Container umfasst, in den die zum Ausführen der Funktion benötigte externe Bibliothek vor der Ausführungsanforderung für die Funktion heruntergeladen wird.

4. System (100) nach Anspruch 1, wobei der Prozessor (220) ferner dazu konfiguriert ist, die mindestens eine Anweisung auszuführen, um der Funktion basierend darauf, dass bestimmt wurde, dass der Rechenaufwand der Funktion kleiner als ein vorher festgelegter Rechenaufwand ist, eine erste vorbestimmte Container-Anzahl zuzuweisen, und der Funktion basierend darauf, dass bestimmt wurde, dass der Rechenaufwand der Funktion gleich oder größer als der vorher festgelegte Rechenaufwand ist, eine zweite vorbestimmte Container-Anzahl zuzuweisen, die größer als die erste vorbestimmte Container-Anzahl ist.

5. Betriebsverfahren zum Bereitstellen einer Funktion als Dienst (FaaS), wobei das Betriebsverfahren Folgendes umfasst:
Empfangen einer Festlegungsanforderung für Ressourcen zum Ausführen der Funktion;
Generieren eines Aufrufers und eines Containers zum Ausführen der Funktion vor einem einer Zeitinformation entsprechenden Zeitpunkt;
Analysieren von Eigenschaften der Funktion, um einen für die Funktion erforderlichen Rechenaufwand zu bestimmen, wobei die Eigenschaften mindestens eines von Folgenden enthalten: Testprotokollinformationen der Funktion, eine Codegröße der Funktion, ob während einer Ausführung der Funktion eine externe Bibliothek benötigt wird und ob andere Funktionen in der Funktion enthalten sind; und
Generieren von Empfehlungsinformationen in Bezug auf ein Festlegen einer Container-Anzahl basierend auf dem bestimmten Rechenaufwand;
Anzeigen der Empfehlungsinformationen für den Benutzer und eines Elements zum Anwenden einer automatischen Vorhersagefunktion in Bezug auf die Funktion;
wobei das Verfahren als Reaktion auf die Auswahl des angezeigten Elements durch den Benutzer ferner Folgendes umfasst:
Analysieren von Ausführungsinformationen der Funktion, um einen Zeitpunkt für die Ausführung der Funktion unter Verwendung eines Vorhersagemodells vorherzusagen, das unter Verwendung der Ausführungsinformationen einer Funktion trainiert wurde, wobei die Ausführungsinformationen Folgendes umfassen: einen Zeitpunkt, zu dem eine Ausführungsanforderung für die Funktion gestellt wird, eine Anzahl von Malen, die die Ausführungsanforderung für die Funktion gestellt wird, und eine Frequenz der Ausführungsanforderung für die Funktion,
Zuweisen der festgelegten Container-Anzahl vor dem vorhergesagten Zeitpunkt; und
nach Empfangen einer Ausführungsanforderung für die Funktion Ausführen der Funktion unter Verwendung der zugewiesenen Container.

## Revendications

1. Système (100) de fourniture d'une fonction à la demande (FaaS), le système comprenant :
un dispositif de communication (210) configuré pour recevoir une demande de réglage de ressources pour exécuter la fonction ;
une mémoire (230) stockant au moins une instruction ; et
un processeur (220) configuré pour exécuter la au moins une instruction stockée dans la mémoire,
ledit processeur étant configuré pour exécuter la au moins une instruction afin de générer, avant un instant correspondant à des informations temporelles, un invocateur et un conteneur pour exécuter la fonction ;
ledit processeur étant en outre configuré pour exécuter la au moins une instruction pour :
analyser des caractéristiques de la fonction pour déterminer une quantité de calcul requise pour la fonction, lesdites caractéristiques comprenant au moins un parmi : des informations de journal d'essai de la fonction, une taille de code de la fonction, la nécessité ou non d'une bibliothèque externe durant une exécution de la fonction, et l'inclusion ou non d'autres fonctions dans la fonction ;
générer des informations de recommandation liées au réglage d'un nombre de conteneurs sur la base de la quantité de calcul déterminée ;
afficher, à l'aide d'un écran (700) du système (100), lesdites informations de recommandation destinées à l'utilisateur et un élément (730) permettant d'appliquer une fonction de prédiction automatique par rapport à la fonction ;
en réponse à la sélection de l'élément (730) affiché sur l'écran (700), ledit processeur étant en outre configuré pour exécuter la au moins une instruction pour analyser des informations d'exécution de la fonction afin de prédire un instant pour l'exécution de la fonction à l'aide d'un modèle de prédiction entraîné à l'aide des informations d'exécution d'une fonction, lesdites informations d'exécution comprenant : un instant auquel une demande d'exécution de la fonction est effectuée, un nombre de fois où la demande d'exécution de la fonction est effectuée, et une fréquence de réalisation de la demande d'exécution de la fonction,
ledit processeur étant en outre configuré pour exécuter la au moins une instruction pour attribuer, avant l'instant prédit, le nombre réglé de conteneurs, et
lors de la réception d'une demande d'exécution de la fonction, exécuter la fonction à l'aide des conteneurs attribués.

2. Système (100) de la revendication 1, ledit processeur (220) étant en outre configuré pour exécuter la au moins une instruction afin de générer, sur la base d'au moins l'une des caractéristiques d'une première fonction et des informations d'exécution de la première fonction, un premier conteneur correspondant à la première fonction, et générer un second conteneur correspondant à une seconde fonction sur la base d'au moins l'une des caractéristiques de la seconde fonction et des informations d'exécution de la seconde fonction,
ladite première fonction étant exécutée à l'aide du premier conteneur sur la base de la demande d'exécution de la première fonction, et ladite seconde fonction étant exécutée à l'aide du second conteneur sur la base de la demande d'exécution de la seconde fonction.

3. Système (100) de la revendication 1, ledit nombre réglé de conteneurs attribués comprenant un conteneur dans lequel la bibliothèque externe nécessaire à l'exécution de la fonction est téléchargée avant la demande d'exécution de la fonction.

4. Système (100) de la revendication 1, ledit processeur (220) étant en outre configuré pour exécuter la au moins une instruction afin d'attribuer un premier nombre prédéfini de conteneurs à la fonction sur la base de la quantité de calcul de la fonction déterminée comme étant inférieure à une quantité de calcul prédéfinie et attribuer un second nombre prédéfini de conteneurs, qui est supérieur au premier nombre prédéfini de conteneurs, à la fonction sur la base de la quantité de calcul de la fonction déterminée comme étant supérieure ou égale à la quantité de calcul prédéfinie.

5. Procédé de fonctionnement de fourniture d'une fonction à la demande (FaaS), le procédé de fonctionnement comprenant :
la réception d'une demande de réglage de ressources en vue de l'exécution de la fonction ;
la génération, avant un instant correspondant à des informations temporelles, d'un invocateur et d'un conteneur pour exécuter la fonction ;
l'analyse des caractéristiques de la fonction pour déterminer une quantité de calcul requise pour la fonction, lesdites caractéristiques comprenant au moins un parmi : des informations de journal d'essai de la fonction, une taille de code de la fonction, la nécessité ou non d'une bibliothèque externe durant une exécution de la fonction, et l'inclusion ou non d'autres fonctions dans la fonction ; et
sur la base de la quantité de calcul déterminée, la génération des informations de recommandation liées à un réglage d'un nombre de conteneurs ;
l'affichage des informations de recommandation à l'utilisateur et d'un élément permettant l'application d'une fonction de prédiction automatique par rapport à la fonction ;
en réponse à la sélection de l'élément affiché par l'utilisateur, ledit procédé comprenant en outre :
l'analyse des informations d'exécution de la fonction pour prédire un instant pour l'exécution de la fonction à l'aide d'un modèle de prédiction entraîné à l'aide des informations d'exécution d'une fonction, lesdites informations d'exécution comprenant : un instant auquel une demande d'exécution de la fonction est effectuée, un nombre de fois où la demande d'exécution de la fonction est effectuée, et une fréquence de la demande d'exécution de la fonction,
l'attribution, avant l'instant prédit, du nombre réglé de conteneurs ; et
lors de la réception d'une demande d'exécution de la fonction, l'exécution de la fonction à l'aide des conteneurs attribués.
